# EUROPEAN PATENT APPLICATION

(11) **EP 4 349 474 A1**
(43) Date of publication of application: **10.04.2024**
(21) Application number: 22936041.7
(22) Date of filing: 23.11.2022
(51) Int. Cl.: B01J 20/08, B01J 20/28, B01J 20/30, C02F 1/28

(54) **METHOD FOR PREPARING ALUMINUM SALT FUNCTIONAL MATERIAL FOR LITHIUM EXTRACTION**

(30) Priority: 04.08.2022 CN 202210935484
(71) Applicant: Chengdu Chemphys Chemical Industry Co., Ltd, Hi-Tech District Chengdu Sichuan 610041 (CN)
(72) Inventor: YANG, Jinfeng, Chengdu, Sichuan 610041 (CN); GAO, Feng, Chengdu, Sichuan 610041 (CN); CHEN, Haitao, Chengdu, Sichuan 610041 (CN); BAN, Wenjun, Chengdu, Sichuan 610041 (CN); CAI, Rongfu, Chengdu, Sichuan 610041 (CN); DAI, Yihua, Chengdu, Sichuan 610041 (CN)
(74) Representative: Ipside
(86) International application number: PCT/CN2022/133726
(87) International publication number: WO 2024/027045

(57) **Abstract**

The present invention relates to a preparation method for a functional material for extracting lithium from an aluminum salt. The method includes the following steps: step 1, preparation of an aluminum salt functional material precursor slurry: mixing polyaluminum, a lithium source and water in proportion, adding an additive, performing ultrasonic stirring to obtain a mixed salt solution, adding an alkali liquor or a basic salt solution into the mixed salt solution at a certain flow rate, adjusting the pH value, and then performing constant-temperature stirring reaction to obtain a lithium-intercalated aluminum salt functional precursor slurry; and step 2, preparing a functional material for extracting lithium from an aluminum salt, namely performing solid-liquid separation, washing and drying on the precursor slurry obtained in the step 1 to obtain the functional material for extracting lithium from an aluminum salt. According to the present invention, cheap polyaluminum is adopted as an aluminum source, and the water solubility is good; the functional material for extracting lithium from an aluminum salt is synthesized with alkali in one step, with high reaction rate, short process and low cos. According to the method, the functional material for extracting lithium from an aluminum salt with high specific surface area, high porosity and high lithium adsorption capacity can be prepared by virtue of strengthening of a freeze-drying technology, and the method can be well used for extracting lithium from high-impurity salt lake brine, with high lithium extraction speed, high selectivity, and potential application value.

## Description

### Technical Field

The present invention relates to the technical field of chemical new materials preparation, and particularly to a preparation method for a functional material for extracting lithium from an aluminum salt.

### Background of the Invention

With the development of science and technology in the new era, the research on lithium salts has also been deepened. In addition to its important application in chemical industry and medicine, lithium, as an energy and strategic resource, has attracted much attention in the 21^{st} century. Especially in recent years, with the development of lithium battery technology and its application in the field of controllable nuclear fusion, its role has become more prominent. At present, the international demand continues to grow at an annual rate of 8% ~ 12%. Therefore, lithium is known as "the 21st-century energy metal" and "the 21st-century clean energy". It has a broad application prospect in the field of new energy. With the increasing market demand, the lithium ore resource reserves are seriously insufficient. The goal is to develop lithium salts in liquid resources. Lithium ion sieve adsorbent has good adsorption selectivity, which can economically extract and separate lithium ions from brine and sea water, attracting much attention from industry personnel.

At present, the lithium adsorbents that can be used to extract lithium from salt lake brine mainly include manganese ion sieve, titanium ion sieve and lithium aluminum layered molecular sieve. The manganese and titanium ion sieves have attracted much attention due to their high adsorption capacity and ultra-high selectivity, but their de-intercalation and desorption cannot be separated from acid pickling, which will cause solution loss and collapse of adsorbent structure, resulting in poor adsorption and regeneration capacity, and limiting their industrial application; The preparation process of aluminum-based adsorbent is simple, mild in the synthesis conditions, and good in the selectivity to lithium. Although the adsorption capacity is lower than that of the ion sieve adsorbent, the aluminum-based adsorbent can be eluted by neutral solution without solution loss. The control of the analytical conditions can make the adsorbent maintain good crystal structure and adsorption capacity in multiple cycles, which has great advantages in industrial application.

The aluminum-based lithium adsorbent is developed from lithium extraction by aluminum salt precipitation. Its adsorbent expression is generally: [LiCl · mAl (OH)₃ · nH₂O] (Li/Al LDHs). LiCl is inserted into the amorphous Al(OH)₃ layer, and Li⁺ enters into the AI-O octahedral cavity. After deintercalating part of Li⁺, there is memory effect and steric-hinerance effect, so as to achieve highly selective adsorption of Li⁺ in salt lake brine. The adsorption-desorption process can be expressed as:

xLiCl+(1-x)LiCl·mAl(OH)₃+(n+1)H₂O↔LiCl·mAl(OH)₃·H₂O+H₂O

In the process of lithium adsorption, Li⁺ preferentially enters the octahedral cavity of the layered Al(OH)₃ due to size matching, and other ions with larger radius cannot be adsorbed into the channel due to the steric-hinerance effect. The aluminum-based adsorbent has the advantages of simple preparation process, high selectivity, good stability and long service life.

At present, there are two processes for preparing adsorbent for extracting lithium from an aluminum salt. One is to use aluminum chloride with higher purity to coprecipitate with alkali liquor to form amorphous Al(OH)₃ structure, and then insert LiCI; the other is to etch inactive Al(OH)₃ with an acid or an alkali, and then insert LiCI. The former has the problems of high aluminum source cost, complex operation and low conversion rate, while the latter has the problems of low adsorption efficiency and high adsorption-desorption erosion.

### Summary of the Invention

In order to solve the problems in the prior art, the main purpose of the present invention is to provide a preparation method for a functional material for extracting lithium from an aluminum salt. The method is a liquid phase reaction, using cheap inorganic polymer material polyaluminum as the aluminum source, and polyaluminum is an inorganic polymer coagulant between aluminum chloride and aluminum hydroxide. With excellent water solubility, it can precipitate with alkali in a liquid phase system to synthesize the functional material for extracting lithium from an aluminum salt. The process is featured by simple operation, low alkali consumption, mild reaction conditions, fast reaction rate and high lithium extraction efficiency is high. Compared with the traditional process, the comprehensive economic benefit is higher. According to the method, the functional material for extracting lithium from an aluminum salt with high porosity and high lithium adsorption capacity can be prepared by virtue of strengthening of a freeze-drying technology, with high lithium extraction speed, high selectivity, and wide brine adaptability. This functional material shows low solution loss in the adsorption-desorption process, and has good industrial application value.

In order to achieve the above objectives, the technical solution adopted in the present invention is as follows:
A preparation method for a functional material for extracting lithium from an aluminum salt, comprising the following steps:
step 1, preparation of an aluminum salt functional material precursor slurry: mixing polyaluminum, a lithium source and water in proportion, adding an additive, performing ultrasonic stirring to obtain a mixed salt solution, adding an alkali liquor or a basic salt solution into the mixed salt solution at a certain flow rate, adjusting the pH value, and then performing constant-temperature stirring reaction to obtain a lithium-intercalated aluminum salt functional precursor slurry; and
preferably, adding the additive to perform ultrasonic stirring for 5-30min; adding the prepared alkali liquor or basic salt solution into the mixed salt solution, adjusting the pH to 5-9, and then performing constant-temperature stirring reaction for 0.2-4h to obtain the lithium-intercalated aluminum salt functional precursor slurry.
step 2, preparation of aluminum salt functional material powder:
   A) preparation of gel:
      The lithium-intercalated aluminum salt functional precursor slurry obtained in step 1 is subjected to solid-liquid separation, and the solid phase obtained is the aluminum salt functional material gel;
   B) scrubbing: scrubbing the aluminum salt functional material gel with deionized water (preferably for 1-3 times), and then performing solid-liquid separation to obtain lithium-intercalated gel;
   C) drying and grinding: drying and grinding the lithium-intercalated gel obtained in step B) to obtain a lithium-intercalated aluminum salt functional material, i.e., a functional material for extracting lithium from an aluminum salt.

As a preferred implementation of the present application, the polyaluminum **in step 1** is industrial grade, drinking water grade or food grade polyaluminum chloride, more preferably drinking water grade or food grade polyaluminum chloride.

As a preferred implementation of the present application, the addition amount of polyaluminum and lithium source **in step 1** is 9:1-1.5:1 according to the molar ratio of aluminum to lithium; more preferably, the molar ratio of aluminum to lithium is 6.5:1-1.95:1, and the amount of water added is 10% - 50% of the solid content; more preferably 15-30%.

As a preferred implementation of the present application, the lithium source is one or a mixture of lithium hydroxide, lithium sulfate, lithium bicarbonate, lithium nitrate, lithium bromide and lithium chloride;

As a preferred implementation of the present application, the alkali in the alkali liquor **in step 1** is any one of sodium hydroxide, potassium hydroxide, barium hydroxide, ammonia or urea; the basic salt in the basic salt solution is any one or a mixture of sodium carbonate, potassium carbonate, ammonium carbonate, ammonium bicarbonate, sodium bicarbonate and potassium bicarbonate; the alkali is more preferably sodium hydroxide, potassium hydroxide or urea; the basic salt is more preferably one of sodium carbonate, potassium carbonate, potassium bicarbonate, ammonium carbonate and ammonium bicarbonate.

As a preferred implementation of the present application, the concentration of the alkali liquor or basic salt solution in step 1 is 1mol/L-8mol/L, more preferably 2mol/L-6mol/L.

As a preferred implementation of the present application, the additive in step 1 is any one of diatomite, titanium dioxide, zirconia and graphene, and the addition amount is 0% - 10% of the solid mass, more preferably 0%-5%.

As a preferred implementation of the present application, the ultrasonic frequency in step 1 is preferably 30KHZ-60KHZ, and the reaction temperature is more preferably 10-40°C.

As a preferred implementation of the present application, the solid-liquid separation method **in step 2** is centrifugal filtration, mechanical pressure filtration or vacuum suction filtration, preferably centrifugal filtration or vacuum suction filtration.

As a preferred implementation of the present application, the drying method **in step 2** is freeze drying, vacuum drying, microwave drying or infrared drying, preferably freeze drying or vacuum drying. The moisture content is controlled as 1%-20% by drying, preferably 2%-10%.

As a preferred implementation of the present application, the particle size D50 of the grinding powder in step 2 is controlled as 0.1-20um, more preferably 0.1-10um.

Another purpose of the present application is to provide a functional material for extracting lithium from an aluminum salt obtained by using any of the above methods.

The functional material for extracting lithium from an aluminum salt obtained by using any of the above methods shows high adsorption activity when used to extract lithium from salt lake brine or simulated brine, and is suitable for extracting lithium from high-impurity salt lake brine with lithium content of 0.1g/L-2g/L. The pH range is 3-10, and its lithium adsorption capacity in 0.5h is 6mg/g-33mg/g.

Compared with the prior art, the present invention has the following beneficial effects:
(1) The cheap polyaluminum used in the method is aluminum source, which is an inorganic water-soluble polymer material. The raw materials are widely sourced, easy to obtain, and low in cost;
(2) The synthesis process is short, the reaction can be synthesized in one step at room temperature, and the alkali consumption is significantly reduced compared with the traditional process; the aluminum salt functional material with large specific surface porosity and high lithium adsorption capacity can be prepared by controlling the higher molar ratio of aluminum to lithium and strengthening the freeze-drying technology, and the input cost of lithium source is also greatly reduced.
(3) The prepared functional material for extracting lithium from an aluminum salt shows high adsorption activity when used to extract lithium from salt lake brine or simulated brine, and is suitable for extracting lithium from high-impurity salt lake brine with lithium content of 0.1g/L-2g/L. The pH range is 3-10, and its lithium adsorption capacity in 0.5h is 6mg/g-30mg/g.
(4) The prepared functional material for extracting lithium from an aluminum salt has fast adsorption-desorption rate and low solution loss for recycling.

### Brief description of the Drawings

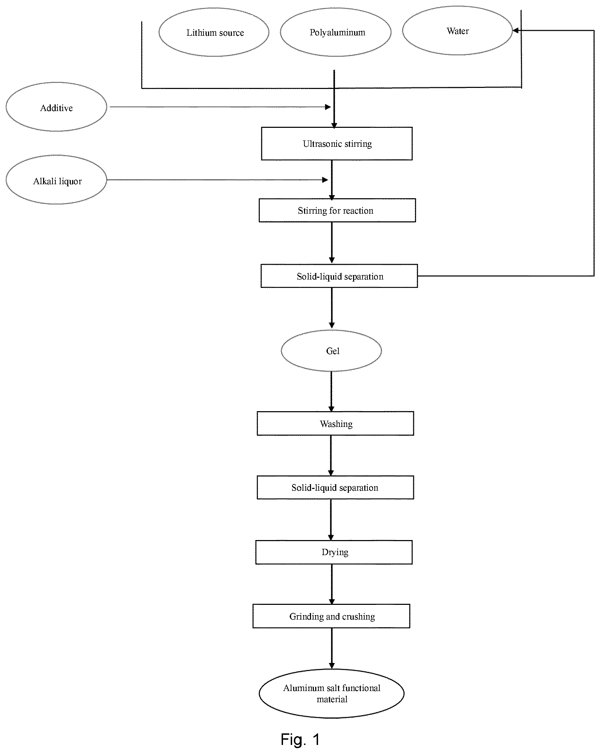

Fig. 1 is a schematic diagram of a preparation process flow of a functional material for extracting lithium from an aluminum salt in the present invention;

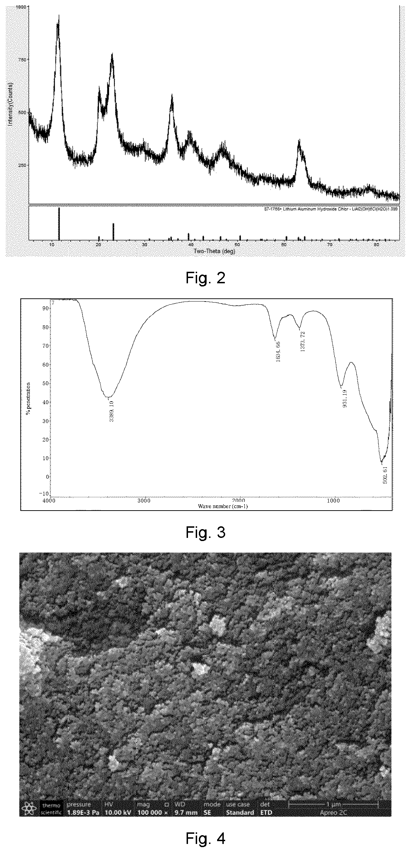

Fig. 2 is an XRD spectrum of the aluminum salt functional material prepared in Embodiment 1;
Fig. 3 is an infrared spectrum of the aluminum salt functional material prepared in Embodiment 1;
Fig. 4 is an SEM photo of the aluminum salt functional material prepared in Embodiment 1;
Fig. 5 is an SEM photo of the aluminum salt functional material prepared in Embodiment 17; and
Fig. 6 shows a static adsorption curve of the aluminum salt functional material prepared in Embodiment 17 in simulated brine and lithium chloride solution.

### Detailed Description of Embodiments

A preparation method for a functional material for extracting lithium from an aluminum salt, comprising the following steps:
step 1, preparation of an aluminum salt functional material precursor slurry: mixing polyaluminum, a lithium source and water in proportion, adding an additive, performing ultrasonic stirring to obtain a mixed salt solution, adding an alkali liquor or a basic salt solution into the mixed salt solution at a certain flow rate, adjusting the pH value, and then performing constant-temperature stirring reaction to obtain a lithium-intercalated aluminum salt functional precursor slurry; and
preferably, adding the additive to perform ultrasonic stirring for 5-30min, which can specifically be 5min, 10min, 15min, 20min, 25min, 30min; adding the prepared alkali liquor or basic salt solution into the mixed salt solution, adjusting the pH to 5-9, which can specifically be 5, 6, 7, 8, 9; and then performing constant-temperature stirring reaction for 0.2-4h (which can specifically be 0.2, 0.5h, 1h, 2h, 3h, 4h) to obtain the lithium-intercalated aluminum salt functional precursor slurry.
Step 2, preparation of aluminum salt functional material powder:
   A) preparation of gel:
      The lithium-intercalated aluminum salt functional precursor slurry obtained in step 1 is subjected to solid-liquid separation, and the solid phase obtained is the aluminum salt functional material gel;
   B) scrubbing: scrubbing the aluminum salt functional material gel with deionized water (preferably for 1-3 times), and then performing solid-liquid separation to obtain lithium-intercalated gel;
   C) drying and grinding: drying and grinding the lithium-intercalated gel obtained in step B) to obtain a lithium-intercalated aluminum salt functional material.

After repeated tests and research, the inventor of the present invention has determined that the additives and the amount of additives involved in the preparation method are specific values, and has prepared the aluminum salt functional material of the present invention with low cost and excellent performance.

The polyaluminum in **step 1** is industrial grade, drinking water grade or food grade polyaluminum chloride, which can specifically be industrial grade polyaluminum chloride, drinking water grade polyaluminum chloride or food grade polyaluminum chloride; more preferably drinking water grade polyaluminum chloride or food grade polyaluminum chloride.

The addition amount of polyaluminum and lithium source **in step 1** is 9:1-1.5:1 according to the molar ratio of aluminum to lithium, which can specifically be 9:1, 8.5:1:8:1, 7.5:1, 7:1, 6.5:1, 6:1, 5.5:1, 5:1, 4.5:1, 4:1, 3.5:1, 3:1, 2.5:1, 2:1, 1.5:1; more preferably, the molar ratio of aluminum to lithium is 6.5:1-1.95:1; the amount of water added is 10% - 50% of the solid content, which can specifically be 10%, 15%, 20%, 25%, 30%, 35%, 40%, 45%, 50%; more preferably 15-30%.

Preferably, the lithium source is any one or a mixture of lithium hydroxide, lithium sulfate, lithium bicarbonate, lithium nitrate, lithium bromide and lithium chloride.

Preferably, the alkali in the alkali liquor **in step 1** is any one of sodium hydroxide, potassium hydroxide, barium hydroxide, ammonia or urea; the basic salt in the basic salt solution is any one or a mixture of sodium carbonate, potassium carbonate, ammonium carbonate, ammonium bicarbonate, sodium bicarbonate and potassium bicarbonate; the alkali is more preferably sodium hydroxide, potassium hydroxide or urea; the basic salt is more preferably one of sodium carbonate, potassium carbonate, potassium bicarbonate, ammonium carbonate and ammonium bicarbonate.

Preferably, the concentration of the alkali liquor or basic salt solution in step 1 is 1mol/L-8mol/L, which can specifically be 1mol/L, 1.5mol/L, 2mol/L, 2.5mol/L, 3mol/L, 3.5mol/L, 4mol/L, 4.5mol/L, 5mol/L, 5.5mol/L, 6mol/L, 6.5mol/L, 7mol/L, 7.5mol/L, 8mol/L; more preferably 2mol/L-6mol/L.

Preferably, the additive in step 1 is any one of diatomite, titanium dioxide, zirconia and graphene, and the addition amount is 0% - 10% of the solid mass, which can specifically be 0%, 1%, 2%, 3%, 4%, 5%, 6%, 7%, 8%, 9%, 10%; more preferably 0%-5%.

Preferably, the ultrasonic frequency in step 1 is 20KHZ-60KHZ, which can specifically be 20KHZ, 30KHZ, 40KHZ, 50KHZ, 60KHZ, more preferably 30KHZ-60KHZ; the reaction temperature is 10∼80 °C, which can specifically be 10°C, 20°C, 30°C, 40°C, 50°C, 60°C, 70°C, 80°C; more preferably 10-40°C.

Preferably, the solid-liquid separation method in step **2** is centrifugal filtration, mechanical pressure filtration or vacuum suction filtration, preferably centrifugal filtration or vacuum suction filtration.

Preferably, the drying method in step **2** is freeze drying, vacuum drying, microwave drying or infrared drying, preferably freeze drying or vacuum drying. The moisture content is controlled as 1%-20% by drying, preferably 2%-10%.

Preferably, the particle size D50 of the grinding powder in step 2 is controlled as 0.1-20um, more preferably 0.1-10um.

Provided is a novel functional material for extracting lithium from an aluminum salt obtained by using any of the above methods.

Preferably, the functional material for extracting lithium from an aluminum salt obtained by using any of the above methods shows high adsorption activity when used to extract lithium from salt lake brine or simulated brine, and is suitable for extracting lithium from high-impurity salt lake brine with lithium content of 0.1g/L-2g/L. The pH range is 3-10, and its lithium adsorption capacity in 0.5h is 6mg/g-33mg/g.

The main solution of the present invention and further alternatives thereof may be combined freely to form a plurality of solutions, all of which may be adopted and claimed in the present invention; and each alternative can be arbitrarily combined with other compatible alternatives according to the present invention. Multiple combinations are clear to those skilled in the art based on the prior art and the common general knowledge after understanding the solutions of the present invention, all of which are technical solutions to be protected by the present invention and are not exhaustive here.

The implementation of the present invention is described below through specific examples, and those skilled in the art can easily understand other advantages and effects of the present invention from the contents disclosed in the Description. The present invention can also be implemented or applied in other different specific implementations, and various details in the Description can also be modified or changed based on different views and applications without departing from the spirit of the present invention. It should be noted that, the following embodiments and the features in the embodiments may be combined with each other in a non-conflicting situation.

It should be noted that, the technical solutions of the embodiments of the present invention will be described clearly and completely as follows in combination with the figures of these embodiments for clear understanding of the objects, technical solutions and advantages of the present invention. Apparently, the embodiments described herein are only some, but not all of the embodiments of the present invention. Generally, the components in the embodiments of the present invention described and shown in the figures herein may be arranged and designed in various configurations. According to the present invention, the specific operations in the stirring, including mechanical stirring and highspeed dispersion, are not specified, and the brine in the present invention is also not specified, any operations and brine well known to those skilled in the art are available.

For data analysis in the following examples, Al, K, Ca, Na, Mg and concentration are analyzed by ICP spectrometry, Cl is analyzed by spectrophotometry or titration, Li and B are determined by atomic absorption spectrometry, and sulfate radical is determined by barium sulfate turbidimetry (GB 13580.6-92). Unless particularly stated elsewhere, % recited in this application shows the mass percentage, namely wt%.

The chemical composition of the simulated brine used in the following embodiments is as follows:

| pH | Density | Li⁺ | Na⁺ | K⁺ | Fe³⁺ | Mg²⁺ | Ca²⁺ | Cl⁻ | SO₄²⁻ | B³⁻ |
|---|---|---|---|---|---|---|---|---|---|---|
| | g/cm³ | mg/L | | | | | | | | |
| 6.8 | 1.2176 | 958 | 113695 | 12630 | 11 | 3606 | 2161 | 188498 | 10326 | 1113 |

### Embodiment 1:

Step 1: mixing 50kg polyaluminum chloride (food grade, aluminum content 14.76%), 2.1kg lithium hydroxide and 250kg water, and adding 0.5kg diatomite at the same time; stirring for 15min under 40KHZ ultrasonic wave to obtain a mixed salt solution; then dropping 16.5L of 3mol/L NaOH aqueous solution into the mixed salt solution; considering the feeding rate according to the feeding time of 45min, adjusting pH=7.1, continuing the mixing and stirring reaction at 25°C for 15min, and obtaining lithium-intercalated aluminum salt functional precursor slurry;
step 2, preparation of aluminum salt functional material powder:
   A) preparation of gel:
      performing suction filtration on the slurry obtained in step 1, the solid phase obtained being the aluminum salt functional material gel;
   B) scrubbing: scrubbing the gel obtained above with deionized water for 1-3 times, and then performing solid-liquid separation to obtain lithium-intercalated gel;
   C) drying: performing freeze vacuum drying treatment on the gel obtained in step B) with the freezing temperature of -20 °C, the vacuum degree of 0.05Pa, and the freezing time of 48h. The functional material for extracting lithium from an aluminum salt is obtained by grinding and sieving. The product particle size D50 range is 0.1-5um, and the yield is 98.5%;

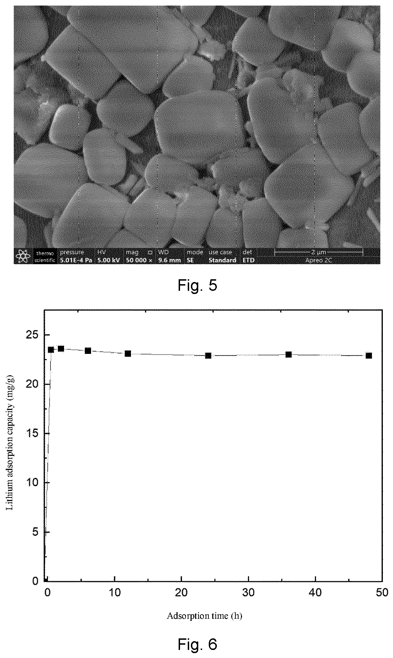

Upon measurement, the molar ratio of aluminum to lithium in the product functional material for extracting lithium from an aluminum salt is 3.1:1, and the porosity is up to 83.1%. The adsorbent is subjected to 150HZ oscillation washing at 25°C for 1h, and then the simulated brine is subjected to the constant-temperature 25°C water bath oscillating adsorption test. It is found that the lithium adsorption capacity of the aluminum salt functional material in 0.5h is **26.5mg/g,** the Li elution rate is 99.7%, and the measured solution loss for five cycles is 0.003%. The 48h static adsorption test shows that the functional material has reached the adsorption dynamic equilibrium line after 0.5h adsorption, as shown in Fig. 6.

### Embodiment 2:

The preparation method is similar to that of Embodiment 1, but the difference is that the aluminum salt functional material is prepared by using 1.3kg LiOH in the reaction raw material in step 1 of Embodiment 1;

### Embodiment 3:

The preparation method is similar to that of Embodiment 1, but the difference is that the aluminum salt functional material is prepared without adding additives such as diatomite in the reaction raw materials in step 1 of Embodiment 1, that is, the amount of additives is 0%;

### Embodiment 4:

The preparation method is similar to that of Embodiment 1, but the difference is that the aluminum salt functional material is prepared by replacing the 3mol/L NaOH aqueous solution in step 1 of Embodiment 1 with 3mol/L KOH aqueous solution;

### Embodiment 5:

The preparation method is similar to that of Embodiment 1, but the difference is that the aluminum salt functional material is prepared by replacing the 3mol/L NaOH aqueous solution in step 1 of Embodiment 1 with urea aqueous solution;

### Embodiment 6:

The preparation method is similar to that of Embodiment 1, but the difference is that the aluminum salt functional material is prepared by replacing the 3mol/L NaOH aqueous solution in step 1 of Embodiment 1 with 3mol/L sodium carbonate solution and mixing based on AI: CO₃=1:1.53 with the pH=7.2 at the reaction terminal;

### Embodiment 7:

The preparation method is similar to that of Embodiment 1, but the difference is that the aluminum salt functional material is prepared by replacing the 3mol/L NaOH aqueous solution in step 1 of Embodiment 1 with 3mol/L potassium carbonate solution and mixing based on Al: CO3=1:1.50 with the pH=7.5 at the reaction terminal;

### Embodiment 8:

The preparation method is similar to that of Embodiment 1, but the difference is that the aluminum salt functional material is prepared by replacing the 3mol/L NaOH aqueous solution in step 1 of Embodiment 1 with 3mol/L potassium bicarbonate solution and mixing based on Al: CO3=1:1.50 with the pH=7.6 at the reaction terminal;

### Embodiment 9:

The preparation method is similar to that of Embodiment 1, but the difference is that the aluminum salt functional material is prepared by replacing LiOH in step 1 of Embodiment 1 with lithium sulfate;

### Embodiment 10:

The preparation method is similar to that of Embodiment 1, but the difference is that the aluminum salt functional material is prepared by replacing LiOH in step 1 of Embodiment 1 with lithium bicarbonate;

### Embodiment 11:

The preparation method is similar to that of Embodiment 1, but the difference is that the aluminum salt functional material is prepared with the freeze drying temperature of -30°C and the vacuum degree of 0.03pa in step 2 of Embodiment 1;

### Embodiment 12:

The preparation method is similar to that of Embodiment 1, but the difference is that the aluminum salt functional material is prepared by vacuum drying as the drying treatment in step 2 of Embodiment 1 with the temperature of 60°C and vacuum degree of 0.08Mpa;

### Embodiment 13:

The preparation method is similar to that of Embodiment 1, but the difference is that the aluminum salt functional material is prepared by microwave drying as the drying treatment in step 2 of Embodiment 1;

### Embodiment 14:

The preparation method is similar to that of Embodiment 1, but the difference is that the aluminum salt functional material is prepared by replacing diatomite in step 1 of Embodiment 1 with nanometer titanium dioxide;

### Embodiment 15:

The preparation method is similar to that of Embodiment 1, but the difference is that the aluminum salt functional material is prepared by replacing diatomite in step 1 of Embodiment 1 with graphene;

### Embodiment 16:

The preparation method is similar to that of Embodiment 1, but the difference is that the aluminum salt functional material is prepared by replacing diatomite in step 1 of Embodiment 1 with zirconium dioxide;

### Comparative example 1

The preparation method is similar to that of Embodiment 1, but the difference is that the pH in step 1 of Embodiment 1 is 4.5;

### Comparative example 2

The preparation method is similar to that of Embodiment 1, but the difference is that the reaction raw material is added after NaOH adjustment;

### Comparative example 3

The preparation method is similar to that of Embodiment 1, but the difference is that the aluminum salt functional material is prepared by replacing polyaluminum chloride in the reaction raw material in step 1 of Embodiment 1 with hydroxyl aluminum chloride;

### Comparative example 4

The preparation method is similar to that of Embodiment 8, but the difference is that the aluminum salt functional material is prepared by replacing aluminum source in the reaction raw material in step 1 of Embodiment 1 with AlCl₃;

The specific test results are as follows:

| Comparative item | Al/Li (molar ratio) of product | Porosity | Lithium adsorption capacity of powder in 0.5h (mg/g) | Solution loss for 5 cycles |
|---|---|---|---|---|
| Embodiment 2 | 5.01:1 | 83.3% | 26.6 | <0.005% |
| Embodiment 3 | 3.1:1 | 79.8% | 25.1 | 0.011% |
| Embodiment 4 | 3.0:1 | 81.8% | 25.5 | <0.005% |
| Embodiment 5 | 3.1:1 | 85.3% | 30.0 | <0.005% |
| Embodiment 6 | 3.0:1 | 70.3% | 23.7 | <0.005% |
| Embodiment 7 | 2.97:1 | 73.7% | 24.1 | <0.005% |
| Embodiment 8 | 3.1:1 | 78.7% | 25.3 | <0.005% |
| Embodiment 9 | 3.2:1 | 70.8% | 22.6 | <0.005% |
| Embodiment 10 | 3.0:1 | 83.7% | 29.1 | <0.005% |
| Embodiment 11 | 3.0:1 | 83.3% | 28.9 | <0.005% |
| Embodiment 12 | 3.1:1 | 70.7% | 21.3 | <0.005% |
| Embodiment 13 | 3.3:1 | 58.1% | 16.8 | <0.005% |
| Embodiment 14 | 3.1:1 | 78.7% | 25.5 | <0.005% |
| Embodiment 15 | 3.0:1 | 86.9% | 30.1 | <0.005% |
| Embodiment 16 | 3.0:1 | 70.9% | 22.9 | <0.005% |
| Comparative example 1 | 3.8:1 | 53.8% | 7.3 | 0.12% |
| Comparative example 2 | 3.3:1 | 56.9% | 7.7 | 0.065% |
| Comparative example 3 | 2.3:1 | 48.9% | 5.5 | 0.11% |
| Comparative example 4 | 2.2:1 | 48.3% | 5.1 | 0.096% |

### Embodiment 17:

Step 1: mixing 50kg drinking water grade polyaluminum (aluminum content 14.5%, Fe content 1.5%, calcium content 6.1%), 3.7kg lithium hydorxide monohydrate and 300kg water, and stirring for 15min under 40KHZ ultrasonic wave to obtain a mixed salt solution; then dropping about 10L of 3mol/L NaOH aqueous solution into the mixed salt solution; pH=7.6 at the terminal, continuing the mixing and stirring reaction at 25°C for 15min, and obtaining lithium-intercalated aluminum salt functional precursor slurry;
step 2, preparation of aluminum salt functional material powder:
   A) preparation of gel:
      performing suction filtration on the slurry obtained in step 1, the solid phase obtained being the aluminum salt functional material gel;
B) scrubbing: scrubbing the gel obtained above with deionized water for 1-3 times, and then performing solid-liquid separation to obtain lithium-intercalated gel;
C) drying: performing freeze vacuum drying treatment on the gel obtained in step B) with the freeze drying temperature of -20 °C and the drying time of 24h. The doped aluminum salt functional material is obtained by grinding and sieving. The product particle size D50 range is 1-10um, and the yield is 95.5%;
   measuring the doped aluminum salt functional material powder to have a molar ratio of aluminum, lithium, iron and calcium of 3:1.02:0.26:1.2, a porosity of 77%, and a BET specific surface area of 136m²/g, and performing constant-temperature 25°C water bath oscillating adsorption test on the simulated brine. Upon measurement, the lithium adsorption capacity of the aluminum salt functional material in 0.5h is **20.5mg/g,** the elution rate is 98.7%, and the solution loss for five cycles is less than 0.0050%.

### Embodiment 18:

The preparation method is similar to that of Embodiment 17, but the difference is that the aluminum salt functional material with the aluminum-lithium ratio of 5:1 is prepared by adding lithium hydroxide in step 1 of Embodiment 11 according to the molar ratio of aluminum to lithium of 5:1.05;

### Embodiment 19:

The preparation method is similar to that of Embodiment 17, but the difference is that the aluminum salt functional material with the aluminum-lithium ratio of 6:1 is prepared by adding lithium hydroxide in step 1 of Embodiment 11 according to the molar ratio of aluminum to lithium of 6:1.05;

### Embodiment 20:

The preparation method is similar to that of Embodiment 1, but the difference is that the aluminum salt functional material is prepared by replacing the 3mol/L NaOH aqueous solution in step 1 of Embodiment 17 with 2mol/L potassium bicarbonate suspension, adding lithium salt mixture prepared in step 1 in the continuous stirring state based on Al:HCO₃=1:1.3 with the pH=7.1 at the reaction terminal;

### Embodiment 21:

The preparation method is similar to that of Embodiment 17, but the difference is that the doped aluminum salt functional material is prepared by replacing the lithium source in step 1 of Embodiment 17 with lithium bicarbonate, and meanwhile replacing 3mol/L NaOH aqueous solution with ammonium bicarbonate solution with the pH=7.0 at the reaction terminal;

The above specific test results are as follows:

| S/N | Al/Li (molar ratio) of product | Porosity | BET/m².g⁻¹ | Li adsorption capacity after 0.5h oscillation (mg/g) |
|---|---|---|---|---|
| Embodiment 17 | 3:1.02 | 73.9% | 136 | 22.5 |
| Embodiment 18 | 5:1.01 | 82.8% | 157 | 25.9 |
| Embodiment 19 | 5.99:1 | 72.7% | 143 | 21.3 |
| Embodiment 20 | 3:1.01 | 80.3% | 148 | 24.1 |
| Embodiment 21 | 3:1.01 | 83.8% | 158 | 26.9 |

| | | | | |
|---|---|---|---|---|
| Note: For determination of the powder porosity, take 50g ion powder dried to constant weight, place it in a 100mL measuring cylinder and vibrate it; read the volume V1; take another 50g aluminum salt functional powder dried to constant weight and add it into a 200mL measuring cylinder; add water and shake the measuring cylinder to obtain a uniformly mixed slurry; add m water, and then perform ultrasonic treatment for 15min and let it stand for 1h to ensure that the total volume V is read after the adsorbent is saturated with water. Then the porosity Φ=(m-V)/V₁×100%; | | | | |

### Cycle stability experiment

The doped aluminum salt functional material prepared in Embodiment 17 is subjected to constant-temperature water bath oscillating adsorption for 0.5h by using simulated brine 1, followed by constant-temperature water bath oscillation washing for 1h and filtering , repeating 50 cycle stability experiments. The concentration of lithium ions is measured by ICP. The evaluation results are as follows:

| Number of cycles | Li adsorption capacity | Li elution rate | Adsorbent solution loss |
|---|---|---|---|
| 1 | 22.5mg/g | 95.8% | <0.005% |
| 2 | 22.1mg/g | 98.7% | |
| .... | .... | .... | |
| 50 | 22.9mg/g | 99.7% | |

The lithium ion exchanger circulates for 20 times, and the powder adsorbent has good stability; the average Li adsorption capacity is stable at >22mg/g, and the Li elution rate is>95%; the solution loss for 50 cycles is <0.01%.

### Embodiment 1 - Brine adsorption experiments of different lithium concentrations:

The functional material prepared in Embodiment 17 is subjected to the simulated brine adsorption experiments with different lithium contents, the constant-temperature water bath oscillating adsorption for 0.5h, then the constant-temperature water bath oscillation washing for 1h and filtering, and then the filtration was carried out. The concentration of lithium ions is measured by ICP. The tests are as follows:

Adsorption test of simulated brine 1

| pH | Density | Li⁺ | Na⁺ | K⁺ | Fe | Mg²⁺ | Ca²⁺ | Cl⁻ | SO₄²⁻ | B³⁻ |
|---|---|---|---|---|---|---|---|---|---|---|
| | g/cm³ | mg/L | | | | | | | | |
| 7.66 | 1.36 | 1170 | 5695 | 301 | 13 | 112500 | 330 | 3398530 | 98300 | 968 |

Li adsorption capacity is 33.8mg/g for the first time, and Li elution rate is 97.7%. After 10 cycles, Li adsorption capacity is 30.5mg/g.

### Adsorption test of simulated brine 2

| pH | Density | Li⁺ | Na⁺ | K⁺ | Fe | Ca²⁺ | Mg²⁺ | Cl- | SO42- | B³⁻ |
|---|---|---|---|---|---|---|---|---|---|---|
| | g/cm³ | mg/L | | | | | | | | |
| 7.5 | 1.185 | 695 | 103000 | 9900 | 8 | 997 | 1990 | 169000 | 6600 | 420 |

| | | | | | | | | | | |
|---|---|---|---|---|---|---|---|---|---|---|
| Li adsorption capacity is 23.8mg/g for the first time, and Li elution rate is 98.7%. After 10 cycles, Li adsorption capacity is 22.5mg/g. | | | | | | | | | | |

### Adsorption test of simulated brine 3

| pH | Density | Li⁺ | Na⁺ | K⁺ | Fe | Ca²⁺ | Mg²⁺ | Cl- | SO42- | B³⁻ |
|---|---|---|---|---|---|---|---|---|---|---|
| | g/cm³ | mg/L | | | | | | | | |
| 6.5 | 1.181 | 380 | 67000 | 5800 | 5 | 657 | 990 | 110200 | 2110 | 273 |

| | | | | | | | | | | |
|---|---|---|---|---|---|---|---|---|---|---|
| Li adsorption capacity is 16.3mg/g for the first time, and Li elution rate is 97.7%. After 10 cycles, Li adsorption capacity is 15.6mg/g. | | | | | | | | | | |

Adsorption test of simulated brine 4

| pH | Density | Li⁺ | Na⁺ | K⁺ | Fe | Ca²⁺ | Mg²⁺ | Cl- | SO42- | B³⁻ |
|---|---|---|---|---|---|---|---|---|---|---|
| | g/cm³ | mg/L | | | | | | | | |
| 6.8 | 1.181 | 197 | 39990 | 3960 | 3 | 867 | 463 | 68000 | 536 | 163 |

| | | | | | | | | | | |
|---|---|---|---|---|---|---|---|---|---|---|
| Li adsorption capacity is 13.8mg/g for the first time, and Li elution rate is 97.2%. After 10 cycles, Li adsorption capacity is 12.7mg/g. | | | | | | | | | | |

### Adsorption test of simulated brine 5

| pH | Density | Li⁺ | Na⁺ | | K⁺ | Fe | Ca²⁺ | Mg²⁺ | Cl- | SO42- | B³⁻ |
|---|---|---|---|---|---|---|---|---|---|---|---|
| | g/cm³ | | | mg/L | | | | | | | |
| 6.5 | 1.181 | 101 | 29800 | | 3200 | 1 | 350 | 178 | 48780 | 873 | 117 |

| | | | | | | | | | | | |
|---|---|---|---|---|---|---|---|---|---|---|---|
| Li adsorption capacity is 8.8mg/g for the first time, and Li elution rate is 98.3%. After 10 cycles, Li adsorption capacity is 8.5mg/g. | | | | | | | | | | | |

The above description of preferred embodiments should not be interpreted in a limiting manner since those of ordinary skill in the art can make improvements or changes according to the aforesaid description, and all these improvements and changes should fall into the protection scope of the claims of the present invention.

## Claims

1. A preparation method for a functional material for extracting lithium from an aluminum salt, **characterized by** comprising the following steps:
step 1, preparation of an aluminum salt functional material precursor slurry: mixing polyaluminum, a lithium source and water in proportion, adding an additive, performing ultrasonic stirring to obtain a mixed salt solution, adding an alkali liquor or a basic salt solution into the mixed salt solution at a certain flow rate, adjusting the pH value, and then performing constant-temperature stirring reaction to obtain a lithium-intercalated aluminum salt functional precursor slurry; and
step 2, preparation of aluminum salt functional material powder:
A) preparation of gel:
The lithium-intercalated aluminum salt functional precursor slurry obtained in step 1 is subjected to solid-liquid separation, and the solid phase obtained is the aluminum salt functional material gel;
B) scrubbing:
scrubbing the aluminum salt functional material gel obtained in the step A) with deionized water, and then performing solid-liquid separation to obtain lithium-intercalated gel;
C) drying and grinding:
drying and grinding the lithium-intercalated gel obtained in the step B) to obtain a functional material for extracting lithium from an aluminum salt.

2. The preparation method according to claim 1, **characterized in that**, the polyaluminum in step 1 is industrial grade, drinking water grade or food grade polyaluminum chloride; the lithium source is any one or a mixture of lithium hydroxide, lithium sulfate, lithium bicarbonate, lithium carbonate, lithium nitrate, lithium bromide and lithium chloride; the alkali in the alkali liquor is any one of sodium hydroxide, potassium hydroxide, barium hydroxide, ammonia or urea; the basic salt in the basic salt solution is any one or a composition of sodium carbonate, potassium carbonate, ammonium carbonate, ammonium bicarbonate, sodium bicarbonate and potassium bicarbonate.

3. The preparation method according to claim 1, **characterized in that**, the addition amount of polyaluminum and lithium source in step 1 is 9:1-1.5:1 according to the molar ratio of aluminum to lithium; the solid content is controlled as 10% - 50% by the amount of water added; the pH value is adjusted to 5-9; the constant-temperature stirring reaction time is 0.2-4h.

4. The preparation method according to claim 1, **characterized in that**, the alkali liquor or basic salt solution in step 1 is added to control the feeding flow rate according to the feeding time of 0.1-2h; the concentration of the alkali liquor or basic salt solution is 1mol/L-8mol/L.

5. The preparation method according to claim 1, **characterized in that**, the additive in step 1 is any one of diatomite, titanium dioxide, zirconia and graphene, and the addition amount is 0% - 10% of the solid mass.

6. The preparation method according to claim 1, **characterized in that**, the ultrasonic frequency in step 1 is 20KHZ-60KHZ, the reaction temperature is 10-80°C, and the ultrasonic stirring time is 5-30min.

7. The preparation method according to claim 1, **characterized in that**, the solid-liquid separation method in step 2 is centrifugal filtration, mechanical pressure filtration or vacuum suction filtration.

8. The preparation method according to claim 1, **characterized in that**, the drying method in step 2 is freeze drying, vacuum drying, microwave drying or infrared drying.

9. The preparation method according to claim 1, **characterized in that**, the particle size D50 of grinding powder in step 2 is controlled as 0.1-20um.

10. A functional material for extracting lithium from an aluminum salt, **characterized in** being prepared by the method according to any of claims 1~9.
